(19) Europäisches Patentamt
European Patent Office
Office européen des brevets

(11) **EP 2 190 048 B1**

(12) **EUROPEAN PATENT SPECIFICATION**

(45) Date of publication and mention
of the grant of the patent:
**09.11.2011 Bulletin 2011/45**

(51) Int Cl.:
**H01M 8/02** (2006.01)    **H01M 8/10** (2006.01)

(21) Application number: **08830416.7**

(22) Date of filing: **02.09.2008**

(86) International application number:
**PCT/JP2008/065703**

(87) International publication number:
**WO 2009/034870 (19.03.2009 Gazette 2009/12)**

(54) **BIPOLAR PLATE FOR FUEL CELL**

BIPOLARPLATTE FÜR BRENNSTOFFZELLE

PLAQUE BIPOLAIRE POUR PILE À COMBUSTIBLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.09.2007 JP 2007236090**

(43) Date of publication of application:
**26.05.2010 Bulletin 2010/21**

(73) Proprietor: **Nisshinbo Holdings, Inc.**
**Tokyo 103-8650 (JP)**

(72) Inventor: **TANNO, Fumio**
**Okazaki-shi**
**Aichi 444-8510 (JP)**

(74) Representative: **Stuart, Ian Alexander**
**Mewburn Ellis LLP**
**33 Gutter Lane**
**London**
**EC2V 8AS (GB)**

(56) References cited:
**EP-A1- 1 826 848    WO-A1-2006/049319**
**JP-A- 2002 201 257    JP-A- 2002 332 328**
**JP-A- 2006 206 790    JP-A- 2007 134 225**
**JP-A- 2007 200 603**

**Description**

TECHNICAL FIELD

The present invention relates to a fuel cell bipolar plate. More particularly, the invention relates to a fuel cell bipolar plate which, even when made thin-walled, has little thickness variation and is capable of exhibiting sufficient strength.

BACKGROUND ART

Fuel cells are devices which, when supplied with a fuel such as hydrogen and with atmospheric oxygen, cause the fuel and oxygen to react electrochemically, producing water and directly generating electricity. Because fuel cells are capable of achieving a high fuel-to-energy conversion efficiency and have an excellent environmental adaptability, they are being developed for a variety of applications, including small-scale local power generation, household power generation, simple power supplies for campgrounds, etc., transporter power supplies such as for automobiles and small boats, and power supplies for satellites and space development.

Such fuel cells, and particularly polymer electrolyte fuel cells, are built in the form of modules composed of a stack of at least several tens of unit cells. Each unit cell has a pair of plate-like bipolar plates with raised areas on either side thereof that define a plurality of channels for the flow of gases such as hydrogen and oxygen. Disposed between the pair of bipolar plates in the unit cell are a polymer electrolyte membrane and gas diffusing electrodes (carbon paper). One role of the fuel cell bipolar plates is to confer each unit cell with electrical conductivity. In addition, the bipolar plates provide flow channels for the supply of fuel and air (oxygen) to the unit cells and also serve as separating boundary walls. Characteristics required of the bipolar plates thus include a high electrical conductivity, a high impermeability to gases, chemical stability, mechanical properties and hydrophilicity.

Fuel cell bipolar plates have a variety of shapes, which are broadly divided according the manner in which the gas flow channels are provided. Examples include shapes wherein ribs that form gas flow channels are provided on one side of the plate-like bipolar plate, shapes wherein ribs are provided on both sides, and shapes wherein the plate has a corrugated cross-section, with grooves on both sides serving as gas flow channels.

In recent years, smaller or thinner dimensions have come to be demanded in a variety of products. In the case of polymer electrolyte fuel cells as well, when consideration is given to their application as an on-board, alternative power source to the internal combustion engine in vehicles, compact fuel cells having a small volume are desired.

Known methods for obtaining thin, high-strength, fuel cell bipolar plates include (1) the method of mixing short fibers, such as carbon fibers or metal fibers, with a material for molding bipolar plates (Patent Document 1: JP-A 2000-182630); (2) the method of orienting a fibrous base material at a given angle to the thickness direction of a bipolar plate so as to ensure the strength of thin-walled portions of the bipolar plate (Patent Document 2: JP-A 2001-189160); and (3) the method of molding a composition which includes a porous artificial graphite that readily absorbs impacts and has excellent resin compatibility and a thermoset resin (Patent Document 3: JP-A 2007-134225).

Bipolar plates obtained by above method (1), being molded from a mixture of graphite powder, a thermoset resin such as phenolic resin or epoxy resin, and carbon fibers, have an improved strength. Yet, because the elastic modulus is very high, they have a tendency to break at a reduced thickness.

Bipolar plates obtained by method (2), like those obtained by method (1), are molded from a carbon composite composition primarily made up of graphite, thermoset resin and a fibrous base material. They have increased strength, but a poor flexibility.

Method (3) resolves the problems of (1) and (2), but because the binder resin has a high melt viscosity and the fuel cell composition does not flow uniformly within the mold, a thickness variation tends to arise in thin-walled bipolar plates. As a result, bipolar plate breakage arises during assembly of the fuel cell.

Patent Document 1: JP-A 2000-182630
Patent Document 2: JP-A 2001-189160
Patent Document 3: JP-A 2007-134225

DISCLOSURE OF THE INVENTION

Problems to be Solved bv the Invention

It is therefore an object of the present invention to provide an excellent fuel cell bipolar plate for which the molding of a thin-walled fuel cell bipolar plate is possible, which has sufficient strength and flexibility, and which moreover has little thickness variation even when made thin-walled.

Means for Solving the Problems

The inventors have conducted extensive investigations in order to achieve the above object. As a result, they have discovered that because fuel cell bipolar plates obtained by molding, such as compression molding, injection molding or transfer molding, a composition which includes a given porous artificial graphite material, o-cresol novolak epoxy resin, phenol novolak resin and an internal mold release agent have much better mechanical properties, such as flexural strength and flexural strain, and much better moldability, than conventional fuel cell bipolar plates, even when made thin-walled, they have a sufficient strength and flexibility, in addition to which a thickness variation does not readily arise. EP-A-1 826 848 discloses fuel cell separator plates obtained by molding a composition of graphite (e.g. artificial graphite) with a cresol novolak epoxy resin having an epoxy equivalent of 170-250 g/eq and a phenol novolak resin having a hydroxyl equivalent of 120 to 200g/eq.

According to the present invention: a fuel cell bipolar plate is obtained by molding a composition comprising 100 parts by weight of a porous artificial graphite material having a true density of from 1.63 to 2.20 g/ml and an average particle size (d = 50) of from 20 to 100 $\mu$m, from 19 to 30 parts by weight of an epoxy resin comprised of a base resin and a curing agent, and from 0.1 to 1.0 part by weight of an internal mold release agent, wherein the base resin is an o-cresol novolak epoxy resin having an epoxy equivalent weight of from 195 to 216 g/eq and an ICI viscosity at 150°C of from 0.20 to 1.00 Pa·s, the curing agent is a phenol novolak resin having a hydroxyl equivalent weight of from 103 to 106 g/eq and an ICI viscosity at 150°C of from 0.03 to 0.50 Pa.s, and the bipolar plate has a thin-walled portion with an average thickness of from 0.12 to 0.20 mm.

The fuel cell bipolar plate desirably has an average thickness of the thin-walled portion such that the thickness variation is within $\pm$10%.

In fuel cell bipolar plate, the phenol novolak resin is desirably included in an amount of from 0.98 to 1.02 equivalent per equivalent of the o-cresol novolak epoxy resin. The epoxy resin may further include an imidazole compound as a curing accelerator; suitably in an amount of from 0.65 to 1.02 part by weight per 100 parts by weight of a mixture of the o-cresol novolak epoxy resin and the phenol novolak resin;

In the fuel cell bipolar plate, it is preferable that the artificial graphite material includes at most 1 wt% of particles with a particle size of up to 1 $\mu$m and at most 1 wt% of particles with a particle size of at least 300 $\mu$m. 8.

The internal mold release agent may be at least one selected from among metal soaps, long-chain fatty acids, and hydrocarbon-based synthetic waxes.

ADVANTAGEOUS EFFECTS OF THE INVENTION

The fuel cell bipolar plate of the present invention, because it is obtained by molding and curing a composition that includes o-cresol novolak epoxy resin of low melt viscosity, phenol novolak resin of low melt viscosity and a porous artificial graphite material of excellent compatibility, readily absorbs impacts, has a sufficient strength even when made thin-walled, and is not readily damaged during removal from the mold.

Because the fuel cell bipolar plate of the invention also has an excellent flexibility, it does not readily incur damage during automated transport when mass-produced and thus has a good handleability.

Moreover, the above composition in this invention has excellent flow properties within a mold and fills even narrow cavities within the mold, enabling thinner-walled fuel cell bipolar plates to be obtained. Because the composition has been sufficiently filled into the mold interior and molded, this thinner-walled bipolar plate has a good thickness precision, which in turn results in a good surface flatness at the top ends of the ribs connected to the thin-walled portions. In particular, in corrugated bipolar plates, the bipolar plate surface of contact with a gas diffusion electrode has a good surface flatness. This good bipolar plate surface flatness, together with the above flexibility, make the fuel cell bipolar plate of the invention an excellent product which does not readily incur breakage during fuel cell assembly.

By using such thin-walled fuel cell bipolar plates according to the invention, polymer electrolyte fuel cells of lower thickness can easily be achieved.

BRIEF DESCRIPTION OF THE DIAGRAMS

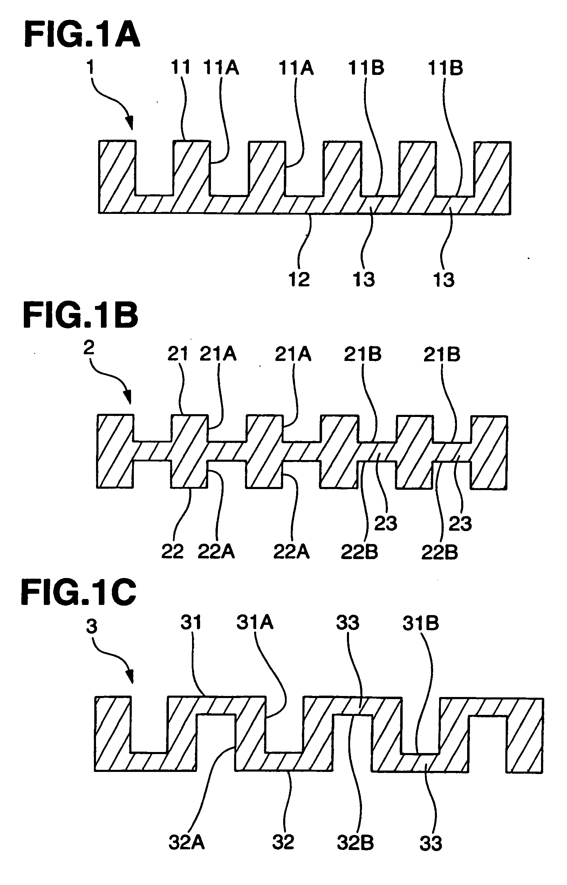

FIG. 1A is a schematic cross-sectional diagram of a fuel cell bipolar plate according to one embodiment of the present invention, FIG. 1B is a schematic cross-sectional diagram of a fuel cell bipolar plate according to another embodiment of the invention, and FIG. 1C is a schematic cross-sectional diagram of a fuel cell bipolar plate according to yet another embodiment of the invention.

EXPLANATION OF REFERENCE SYMBOLS

1, 2, 3: Fuel cell bipolar plate
13, 23, 33: Thin-walled portion

BEST MODE FOR CARRYING OUT THE INVENTION

The invention is described more fully below.

The thin fuel cell bipolar plate of the invention is obtained by molding a composition which includes 100 parts by weight of a porous artificial graphite material having a true density of from 1.63 to 2.20 g/ml and an average particle size (d = 50) of from 20 to 100 $\mu$m, from 19 to 30 parts by weight of an epoxy resin composed of a base resin and a curing agent, and from 0.1 to 1.0 part by weight of an internal mold release agent. An o-cresol novolak-type epoxy resin having an epoxy equivalent weight of from 195 to 216 g./eq and an ICI viscosity at 150°C of from 0.20 to 1.00 Pa·s is used as the base resin, and a phenol novolak resin having a hydroxyl equivalent weight of from 103 to 106 g/eq and an ICI viscosity at 150°C of from 0.03 to 0.50 Pa·s is used as the curing agent. The bipolar plate has thin-walled portions with an average thickness of from 0.12 to 0.20 mm.

The porous artificial graphite material used in the present invention is preferably lump graphite or lump graphite that has been spheroidized. The porous artificial graphite material has a true density of preferably from 1.63 to 2.20 g/ml. At a graphite material true density below 1.63 g/ml, the overabundance of pores facilitates adsorption of the thermoset resin at the interior of the pores, which may lower the moldability. Alternatively, at a graphite material true density greater than 2.20 g/ml, there is a dearth of pores, which may make it impossible to achieve a sufficient strength. The true density is a measured value obtained by pycnometry.

The average particle size of the porous artificial graphite material, taken as d50 of the particle size distribution, is preferably from 20 to 100 $\mu$m, and more preferably from 30 to 80 $\mu$m. At an average particle size below 20 $\mu$m, the thermoset resin will tend to coat the surface of the graphite material, reducing the surface area of contact between particles, which may worsen the electrical conductivity of the bipolar plate itself. On the other hand, at an average particle size greater than 100 $\mu$m, the surface area of contact between the graphite particles and the thermoset resin becomes smaller, as a result of which a sufficient mechanical strength may not be achieved.

For the fuel cell bipolar plate to exhibit sufficient strength even when it has been made thin-walled, a porous artificial graphite material in which at most 1 wt% of the particles have a particle size of up to 1 $\mu$m and at most 1 wt% of the particles have a particle size of at least 300 $\mu$m is more preferred; an artificial graphite material in which at most 1 wt% of particles have a particle size of up to 3 $\mu$m and at most 1 wt% of the particles have a particle size of at least 250 $\mu$m is most preferred.

The average particle size is a value measured with a particle size analyzer (manufactured by Microtrak).

In the present invention, the epoxy resin serving as the binder component resin includes at least o-cresol novolak epoxy resin as the base resin and phenol novolak resin as the curing agent, and may optionally include an imidazole compound as a curing accelerator.

In this case, it is preferable for the phenol novolak resin to be included in an amount of from 0.98 to 1.02 equivalent per equivalent of the o-cresol novolak epoxy resin. At less than 0.98 equivalent of the phenolic resin, unreacted epoxy resin will remain and the unreacted ingredient may leach out during power generation. On the other hand, at more than 1.02 equivalent, unreacted phenolic resin will remain and the unreacted ingredient may leach out during power generation. In addition, when an imidazole compound is used, it is preferable to include from 0.65 to 1.02 part by weight of the imidazole compound per 100 parts by weight of a mixture of the o-cresol novolak epoxy resin and the phenol novolak resin. If the amount of imidazole compound included is less than 0.65 part by weight, the binder component curing reaction may slow down or the curing reaction may be insufficient. On the other hand, at more than 1.02 part by weight, the binder ingredient curing reaction may become too sensitive, possibly shortening the pot life.

The epoxy equivalent weight of the o-cresol novolak epoxy resin is preferably from 195 to 216 g/eq, and more preferably from 200 to 208 g/eq. At an epoxy equivalent weight of less than 195 g/eq, the molecular weight of the epoxy resin is lower, as a result of which the heat resistance of the fuel cell bipolar plate may worsen. On the other hand, at an epoxy equivalent weight of more than 216 g/eq, the cured composition may have a lower crosslink density and thus a poor heat resistance. The o-cresol novolak epoxy resin has an ICI viscosity at 150°C of preferably from 0.20 to 1.00 Pa·s, and more preferably from 0.50 to 0.80 Pa·s. At an ICI viscosity of less than 0.20 Pa·s, the epoxy resin has a low molecular weight, as a result of which the heat resistance may worsen. On the other hand, at an ICI viscosity of more than 1.00 Pa·s, the flow properties of the binder resin will worsen, as a result of which it may be impossible to mold a thin-walled bipolar plate or the thickness variation may exceed 100 $\mu$m.

The phenol novolak resin serving as the curing agent in the above epoxy resin has a hydroxyl equivalent weight of preferably from 103 to 106 g/eq. At a hydroxyl equivalent weight of less than 103 g/eq, the phenol novolak resin has a low molecular weight, as a result of which the heat resistance of the bipolar plate may worsen. On the other hand, at a hydroxyl equivalent weight of more than 106 g/eq, the crosslink density during curing is lower, as a result of which the heat resistance may worsen. The phenol novolak resin has an ICI viscosity at 150°C of preferably from 0.03 to 0.50 Pa·s, and more preferably from 0.05 to 0.30 Pa·s. At an ICI viscosity at 150°C of less than 0.03 Pa·s, the phenol novolak resin has a low molecular weight, as a result of which the heat resistance may worsen. On the other hand, at an ICI viscosity of more than 0.50 Pa·s, the binder resin will have poor flow properties, as a result of which it may be impossible to mold a thin-walled bipolar plate or the thickness variation may exceed 100 $\mu$m.

The imidazole compound used as a curing accelerator is not subject to any particular limitation. However, taking into account, for example, improvement in the heat resistance of the resulting bipolar plate, a 2-alkylimidazole is preferred, a 2-$C_{6-17}$ alkylimidazole is more preferred, and a $C_{10-17}$ alkylimidazole is even more preferred. Illustrative examples include 2-hexylimidazole, 2-heptylimidazole, 2-octylimidazole, 2-nonylimidazole, 2-decylimidazole, 2-undecylimidazole and 2-heptadecylimidazole. 2-Undecylimidazole and 2-heptadcylimidazole are preferred. The imidazole compound may be used singly or as a combination of two or more thereof.

The internal mold release agent is not subject to any particular limitation. Use may be made of various internal mold release agents that have hitherto been used for molding fuel cell bipolar plates. Illustrative examples include metal soaps such as calcium stearate and zinc stearate, hydrocarbon-based synthetic waxes such as polyethylene wax, and long-chain fatty acids such as carnauba wax. These may be used singly or as a combination of two or more thereof.

The blending proportions of the porous artificial graphite material, binder component resins and internal mold release agent in the present invention are as follows: the amount of the binder component resins is from 19 to 30 parts by weight, and the amount of the internal mold release agent is from 0.1 to 1.0 parts by weight, per 100 parts by weight of the porous artificial graphite material. The amount of the binder component resins is preferably from 21 to 28 parts by weight, and more preferably from 23 to 26 parts by weight, and the amount of the internal mold release agent is preferably from 0.2 to 0.7 part by weight, and more preferably from 0.3 to 0.5 part by weight, per 100 parts by weight of the porous artificial graphite material.

When the amount of binder component resins is less than 19 parts by weight, gaps tend to arise between graphite powder particles, possibly leading to decreases in the gas impermeability and strength. On the other hand, when the content of the binder component resins exceeds 30 parts by weight, the binder component resins will end up coating the surface of the graphite powder, which may lower the electrical conductivity.

At an internal mold release agent content of less than 0.1 part by weight, due to insufficient mold release agent, the fuel cell bipolar plate will stick to the mold surfaces, which may make it impossible to remove the bipolar plate from the mold. Alternatively, at an internal mold release agent content of more than 1.0 part by weight, the binder component resin curing reaction may slow or become incomplete.

In the present invention, to the extent that no loss in the performance of the molded article occurs, other additives (short fibers, such as carbon fibers and metal fibers) may be included in the fuel cell bipolar plate composition.

The fuel cell bipolar plate of the invention is a molded article produced by blending together each of the above-described ingredients to prepare a fuel cell bipolar plate composition, and molding the composition.

No particular limitation is imposed on the method of preparing the composition; use may be made of any conventional known method. For example, preparation may be carried out by mixing in any order the porous artificial graphite material, the binder component resins and the internal mold release agent in specific ratios. Examples of mixers that may be used to prepare the composition include planetary mixers, ribbon blenders, Loedige mixers, Henschel mixers, rocking mixers and Nauta mixers.

The method of molding the fuel cell bipolar plate is not subject to any particular limitation. For example, use may be made of injection molding, transfer molding or compression molding. Any conventional known conditions may be employed for the mold temperature during molding, the molding pressure and the molding time. For example, use may be made of the following conditions: a mold temperature of 150 to 180°C, a molding pressure of 20 to 50 MPa, and a molding time of 1 to 5 minutes.

By using the above composition, the fuel cell bipolar plate of the invention may be reduced to a thickness in the thin-walled portions of from 0.12 to 0.20 mm while yet achieving a high strength and high toughness characterized by a flexural strength of 67 to 90 MPa, a flexural modulus of 10 to 12 GPa and a flexural strain of 0.7 to 1.0%, and also making the thickness variation small. In particular, within the above average thickness range, the thickness variation can be held to within $\pm$10%, such as from $\pm$4% to $\pm$10%, of the thickness.

Here, "thin-walled portions" of the inventive fuel cell bipolar plate refer to regions defined by the bottom of a gas flow channel formed in the fuel cell bipolar plate and a surface on the opposite side of the bipolar plate.

For example, FIG. 1A shows, in a bipolar plate 1 on one side 11 of which are formed gas flow channels 11A, thin-walled portions 13 defined by flow channel bottoms 11B and a bipolar plate surface 12 on which flow channels are not formed. FIG. 1B shows, in a bipolar plate 2 on both sides 21 and 22 of which are formed, respectively, gas flow channels 21A and 22A, thin-walled portions 23 defined by respective, mutually opposed, flow channel bottoms 21B and 22B. FIG. 1C shows, in a bipolar plate 3 of corrugated cross-section on both sides 31 and 32 of which are formed, respectively, gas flow channels 31A and 32A, thin-walled portions 33 defined by the respective flow channel bottoms 31B and 32B and the surfaces 32 and 31 on the opposite sides thereto.

In cases where, as in each of the foregoing embodiments, there exist a plurality of thin-walled portions, "average thickness" denotes the average thickness of all the thin-walled portions.

Fuel cell bipolar plates having the above characteristics may be suitably used particularly as bipolar plates for polymer electrolyte fuel cells. A polymer electrolyte fuel cell is generally composed of a stack of many unit cells, each of which is constructed of a polymer electrolyte membrane disposed between a pair of electrodes that are in turn sandwiched between a pair of bipolar plates which form channels for the supply and removal of gases. The fuel cell bipolar plate of the invention may be used as some or all of the plurality of bipolar plates in the fuel cell.

EXAMPLES

Examples of the invention and Comparative Examples are given below by way of illustration and not by way of limitation. Average particle sizes and true densities were measured by the following methods. The ICI viscosities and equivalent weights are values from test certificates based on measurements by the resin manufacturers.

[1] Average Particle Size
Measured using a particle size analyzer (manufactured by Microtrak).
[2] True Density
Measured by pycnometry.

Example 1

One hundred parts by weight of a porous artificial graphite material having a true density of 2.20 g/ml and an average particle size of 50 $\mu$m (d = 50), 17 parts by weight of o-cresol novolak epoxy resin having an epoxy equivalent weight of 200 g/eq and an ICI viscosity at 150°C of 0.26 Pa·s, 9 parts by weight of phenol novolak resin having a hydroxyl equivalent weight of 105 g/eq and an ICI viscosity at 150°C of 0.10 Pa·s. 0.26 part by weight of 2-heptadecylimidazole as a curing accelerator, and 1 part by weight of carnauba wax as an internal mold release agent were charged into a Henschel mixer and mixed at 1500 rpm for 3 minutes to prepare a fuel cell bipolar plate composition. Twenty-eight grams of the resulting fuel cell bipolar plate composition was charged into a 300 mm x 200 mm mold and compression-molded at a mold temperature of 180°C and a molding pressure of 40 MPa for a molding time of 2 minutes, thereby obtaining a fuel cell bipolar plate like that shown in FIG. 1 in which the thin-walled portions 13 had an average thickness of 0.16 mm.

Example 2

Aside from using a porous artificial graphite material having a true density of 2.00 g/ml and an average particle size of 100 $\mu$m (d = 50), a fuel cell bipolar plate composition and a fuel cell bipolar plate were obtained in the same way as in Example 1. The thin-walled portions 13 in the resulting bipolar plate had an average thickness of 0.20 mm.

Example 3

Aside from using a porous artificial graphite material having a true density of 1.92 g/ml and an average particle size of 80 $\mu$m (d = 50), a fuel cell bipolar plate composition and a fuel cell bipolar plate were obtained in the same way as in Example 1. The thin-walled portions 13 in the resulting bipolar plate had an average thickness of 0.18 mm.

Example 4

Aside from using a porous artificial graphite material having a true density of 1.75 g/ml and an average particle size of 30 $\mu$m (d = 50), a fuel cell bipolar plate composition and a fuel cell bipolar plate were obtained in the same way as in Example 1. The thin-walled portions 13 in the resulting bipolar plate had an average thickness of 0.13 mm.

Example 5

Aside from using a porous artificial graphite material having a true density of 1.63 g/ml and an average particle size of 20 $\mu$m (d = 50), a fuel cell bipolar plate composition and a fuel cell bipolar plate were obtained in the same way as in Example 1. The thin-walled portions 13 in the resulting bipolar plate had an average thickness of 0.12 mm.

Comparative Example 1

Aside from using a porous artificial graphite material having a true density of 1.63 g/ml and an average particle size of 15 $\mu$m (d = 50), a fuel cell bipolar plate composition and a fuel cell bipolar plate were obtained in the same way as in Example 1. The thin-walled portions 13 in the resulting bipolar plate had an average thickness of 0.12 mm.

Comparative Example 2

Aside from using a porous artificial graphite material having a true density of 1.60 g/ml and an average particle size of 22 $\mu$m (d = 50), a fuel cell bipolar plate composition and a fuel cell bipolar plate were obtained in the same way as in Example 1. The thin-walled portions 13 in the resulting bipolar plate had an average thickness of 0.23 mm.

Comparative Example 3

Aside from using a porous artificial graphite material having a true density of 2.20 g/ml and an average particle size of 124 $\mu$m (d = 50), a fuel cell bipolar plate composition was prepared and compression-molded in the same way as in Example 1. However, because breakage occurred during demolding, a fuel cell bipolar plate could not be obtained.

Comparative Example 4

Aside from using a porous artificial graphite material having a true density of 2.21 g/ml and an average particle size of 100 $\mu$m (d = 50), a fuel cell bipolar plate composition was prepared and compression-molded in the same way as in Example 1. However, because breakage occurred during demolding, a fuel cell bipolar plate could not be obtained.

Comparative Example 5

Aside from using a needle-like artificial graphite material having a true density of 2.25 g/ml and an average particle size of 60 $\mu$m (d = 50), a fuel cell bipolar plate composition was prepared and compression-molded in the same way as in Example 1. However, because breakage occurred during demolding, a fuel cell bipolar plate could not be obtained.

Comparative Example 6

Aside from using a natural graphite material having a true density of 2.28 g/ml and an average particle size of 30 $\mu$m (d = 50), a fuel cell bipolar plate composition was prepared and compression-molded in the same way as in Example 1. However, because breakage occurred during demolding, a fuel cell bipolar plate could not be obtained.
Table 1 shows differences in the flexural strength, flexural modulus, flexural strain, resistivity and thickness variation of the bipolar plate due to the type of graphite in Examples 1 to 5 and in Comparative Examples 1 to 6.
## Table 1

| | | Type of graphite | True density (g/ml) | Average particle size (μm) | Flexural strength (MPa) | Flexural modulus (GPa) | Flexural strain (%) | Resistivity (mΩ·cm) | Average thickness (μm) | Thickness variation (μm) | Thickness variation (%) |
|---|---|---|---|---|---|---|---|---|---|---|---|
| Example | 1 | porous artificial graphite | 2.20 | 50 | 70 | 12 | 0.7 | 8 | 160 | 21 | ±6.6 |
| | 2 | porous artificial graphite | 2.00 | 100 | 67 | 12 | 0.7 | 6 | 200 | 16 | ±4.0 |
| | 3 | porous artificial graphite | 1.92 | 80 | 90 | 10 | 0.9 | 9 | 180 | 22 | ±6.1 |
| | 4 | porous artificial graphite | 1.75 | 30 | 90 | 11 | 1.0 | 10 | 130 | 24 | ±9.2 |
| | 5 | porous artificial graphite | 1.63 | 20 | 80 | 10 | 1.0 | 10 | 120 | 14 | ±5.8 |
| Comparative Example | 1 | porous artificial graphite | 1.63 | 15 | 75 | 11 | 0.8 | 38 | 120 | 32 | ±13 |
| | 2 | porous artificial graphite | 1.60 | 22 | 63 | 13 | 0.5 | 9 | 230 | 70 | ±15 |
| | 3 | porous artificial graphite | 2.20 | 124 | -- | -- | -- | -- | -- | -- | -- |
| | 4 | porous artificial graphite | 2.21 | 100 | -- | -- | -- | -- | -- | -- | -- |
| | 5 | needle-like artificial graphite | 2.25 | 60 | -- | -- | -- | -- | -- | -- | -- |
| | 6 | natural graphite | 2.28 | 30 | -- | -- | -- | -- | -- | -- | -- |

As shown in Table 1, in Examples 1 to 5, it was possible to mold fuel cell bipolar plates in which the thin-walled portions had an average thickness of from 0.12 to 0.20 mm and a thickness variation of within 25 μm. Even in Comparative Example 1, it was possible to mold a fuel cell bipolar plate which, at a similarly low thickness as in Examples 1 to 5, had a thickness variation of 32 μm, but the electrical conductivity was insufficient. In Comparative Example 2, because the material had insufficient flow properties, the thickness variation was 70 μm, resulting in an insufficient thickness precision. In Comparative Examples 3 to 6, the fuel cell bipolar plates broke during removal from the molds, presumably because the strength and flexural strain of the fuel cell bipolar plates were insufficient.

Example 6

Aside from using 17 parts by weight of o-cresol novolak epoxy resin having an epoxy equivalent weight of 195 g/eq and an ICI viscosity at 150°C of 0.20 Pa·s, a fuel cell bipolar plate composition and a fuel cell bipolar plate were obtained in the same way as in Example 1. The thin-walled portions 13 in the resulting bipolar plate had an average thickness of 0.15 mm.

Example 7

Aside from using 17 parts by weight of o-cresol novolak epoxy resin having an epoxy equivalent weight of 202 g/eq and an ICI viscosity at 150°C of 0.60 Pa·s, a fuel cell bipolar plate composition and a fuel cell bipolar plate were obtained in the same way as in Example 1. The thin-walled portions 13 in the resulting bipolar plate had an average thickness of 0.16 mm.

Example 8

Aside from using 18.5 parts by weight of o-cresol novolak epoxy resin having an epoxy equivalent weight of 216 g/eq and an ICI viscosity at 150°C of 1.00 Pa·s, a fuel cell bipolar plate composition and a fuel cell bipolar plate were obtained in the same way as in Example 1. The thin-walled portions 13 in the resulting bipolar plate had an average thickness of 0.19 mm.

Comparative Example 7

Aside from using 16.5 parts by weight of o-cresol novolak epoxy resin having an epoxy equivalent weight of 194 g/eq and an ICI viscosity at 150°C of 0.16 Pa·s, a fuel cell bipolar plate composition and a fuel cell bipolar plate were obtained in the same way as in Example 1. The thin-walled portions 13 in the resulting bipolar plate had an average thickness of 0.13 mm.

Comparative Example 8

Aside from using 17 parts by weight of o-cresol novolak epoxy resin having an epoxy equivalent weight of 202 g/eq and an ICI viscosity at 150°C of 1.15 Pa·s, a fuel cell bipolar plate composition was prepared and compression-molded in the same way as in Example 1. However, molding of the fuel cell bipolar plate was incomplete.

Comparative Example 9

Aside from using 19 parts by weight of o-cresol novolak epoxy resin having an epoxy equivalent weight of 223 g/eq and an ICI viscosity at 150°C of 2.28 Pa·s, a fuel cell bipolar plate composition was prepared and compression-molded in the same way as in Example 1. However, molding of the fuel cell bipolar plate was incomplete.

Table 2 shows differences in the flexural strength, flexural modulus, flexural strain, glass transition point (Tg) and thickness variation of the bipolar plate due to the viscosity of the o-cresol novolak epoxy resin in Examples 6 to 8 and in Comparative Examples 7 to 9.

## Table 2

| | | ICI viscosity (Pa·s) | Epoxy eq. wt. (g/eq) | Flexural strength (MPa) | Flexural modulus (GPa) | Flexural strain (%) | Tg (°C) | Average thickness (μm) | Thickness variation (μm) | Thickness variation (%) |
|---|---|---|---|---|---|---|---|---|---|---|
| Example | 6 | 0.20 | 195 | 72 | 10 | 0.8 | 153 | 150 | 19 | ±6.3 |
| | 7 | 0.60 | 202 | 73 | 12 | 0.8 | 160 | 160 | 28 | ±8.8 |
| | 8 | 1.00 | 216 | 71 | 10 | 0.9 | 175 | 190 | 27 | ±7.1 |
| Comparative Example | 7 | 0.16 | 194 | 69 | 10 | 0.7 | 125 | 130 | 16 | ±6.1 |
| | 8 | 1.15 | 202 | -- | -- | -- | -- | -- | -- | -- |
| | 9 | 2.28 | 223 | -- | -- | -- | -- | -- | -- | -- |

As shown in Table 2, in Examples 6 to 8, it was possible to mold fuel cell bipolar plates in which the thin-walled portions had an average thickness of from 0.15 to 0.19 mm and a thickness variation of within 30 μm. Even in Comparative Example 7, it was possible to mold a fuel cell bipolar plate which, at a similarly low thickness as in Examples 6 to 8, had a thickness variation of 16 μm, but because the glass transition point was low, the heat resistance was insufficient. In Comparative Examples 8 and 9, fuel cell bipolar plates with an average thickness of not more than 0.2 mm could not be molded, presumably because the epoxy resin viscosity was high, giving the fuel cell bipolar plate composition poor flow properties within the mold and thus preventing the composition from thoroughly filling the mold interior.

Example 9

Aside from using 9.1 parts by weight of phenol novolak resin having a hydroxyl equivalent weight of 106 g/eq and an ICI viscosity at 150°C of 0.03 Pa·s, a fuel cell bipolar plate composition and a fuel cell bipolar plate were obtained in the same way as in Example 1. The thin-walled portions 13 in the resulting bipolar plate had an average thickness of 0.12 mm.

Example 10

Aside from using 8.9 parts by weight of phenol novolak resin having a hydroxyl equivalent weight of 103 g/eq and an ICI viscosity at 150°C of 0.32 Pa·s, a fuel cell bipolar plate composition and a fuel cell bipolar plate were obtained in the same way as in Example 1. The thin-walled portions 13 in the resulting bipolar plate had an average thickness of 0.18 mm.

Example 11

Aside from using 9 parts by weight of phenol novolak resin having a hydroxyl equivalent weight of 104 g/eq and an ICI viscosity at 150°C of 0.46 Pa·s, a fuel cell bipolar plate composition and a fuel cell bipolar plate were obtained in the same way as in Example 1. The thin-walled portions 13 in the resulting bipolar plate had an average thickness of 0.19 mm.

Comparative Example 10

Aside from using 8.8 parts by weight of phenol novolak resin having a hydroxyl equivalent weight of 102 g/eq and an ICI viscosity at 150°C of 0.02 Pa·s, a fuel cell bipolar plate composition and a fuel cell bipolar plate were obtained in the same way as in Example 1. The thin-walled portions 13 in the resulting bipolar plate had an average thickness of 0.12 mm.

Comparative Example 11

Aside from using 9.1 parts by weight of phenol novolak resin having a hydroxyl equivalent weight of 107 g/eq and an ICI viscosity at 150°C of 0.62 Pa·s, a fuel cell bipolar plate composition was prepared in the same way as in Example 1 and compression-molded. However, molding of the fuel cell bipolar plate was incomplete.
Table 3 shows differences in the flexural strength, flexural modulus, flexural strain, glass transition point (Tg) and thickness variation of the bipolar plate due to the viscosity of the phenol novolak resin in Examples 9 to 11 and in Comparative Examples 10 and 11.
## Table 3

|  |  | ICI viscosity (Pa·s) | Hydroxyl eq. wt. (g/eq) | Flexural strength (MPa) | Flexural modulus (GPa) | Flexural strain (%) | Tg (°C) | Average thickness (μm) | Thickness variation (μm) | Thickness variation (%) |
|---|---|---|---|---|---|---|---|---|---|---|
| Example | 9 | 0.03 | 106 | 72 | 10 | 0.8 | 150 | 120 | 12 | ±5.0 |
| | 10 | 0.32 | 103 | 73 | 10 | 0.9 | 160 | 180 | 21 | ±5.8 |
| | 11 | 0.46 | 104 | 71 | 10 | 0.8 | 170 | 190 | 18 | ±4.7 |
| Comparative Example | 10 | 0.02 | 102 | 70 | 11 | 0.7 | 130 | 120 | 17 | ±7.1 |
| | 11 | 0.62 | 107 | -- | -- | -- | -- | -- | -- | -- |

As shown in Table 3, in Examples 9 to 11, it was possible to mold fuel cell bipolar plates in which the thin-walled portions had an average thickness of from 0.12 to 0.19 mm and a thickness variation of within 21 μm. Even in Comparative Example 10, it was possible to mold a fuel cell bipolar plate which, at a similarly low thickness as in Examples 9 to 11, had a thickness variation of 17 μm, but because the glass transition point was low, the heat resistance was insufficient. In Comparative Example 11, fuel cell bipolar plates in which the thin-walled portions had an average thickness of not more than 0.20 mm could not be molded, presumably because the phenol novolak resin viscosity was high, giving the fuel cell bipolar plate composition poor flow properties within the mold and thus preventing the composition from thoroughly filling the mold interior.

### Example 12

Aside from using 12.8 parts by weight of o-cresol novolak epoxy resin having an epoxy equivalent weight of 200 g/eq and an ICI viscosity at 150°C of 0.26 Pa·s, 6.8 parts by weight of phenol novolak resin having a hydroxyl equivalent weight of 105 g/eq and an ICI viscosity at 150°C of 0.10 Pa·s, and 0.20 part by weight of 2-heptadecylimidazole as a curing accelerator, a fuel cell bipolar plate composition and a fuel cell bipolar plate were obtained in the same way as in Example 1. The thin-walled portions 13 in the resulting bipolar plate had an average thickness of 0.20 mm.

### Example 13

Aside from using 14.8 parts by weight of o-cresol novolak epoxy resin having an epoxy equivalent weight of 200 g/eq and an ICI viscosity at 150°C of 0.26 Pa·s, 7.8 parts by weight of phenol novolak resin having a hydroxyl equivalent weight of 105 g/eq and an ICI viscosity at 150°C of 0.10 Pa·s, and 0.23 part by weight of 2-heptadecylimidazole as a curing accelerator, a fuel cell bipolar plate composition and a fuel cell bipolar plate were obtained in the same way as in Example 1. The thin-walled portions 13 in the resulting bipolar plate had an average thickness of 0.18 mm.

### Example 14

Aside from using 17.5 parts by weight of o-cresol novolak epoxy resin having an epoxy equivalent weight of 200 g/eq and an ICI viscosity at 150°C of 0.26 Pa·s, 9.2 parts by weight of phenol novolak resin having a hydroxyl equivalent weight of 105 g/eq and an ICI viscosity at 150°C of 0.10 Pa·s, and 0.27 part by weight of 2-heptadecylimidazole as a curing accelerator, a fuel cell bipolar plate composition and a fuel cell bipolar plate were obtained in the same way as in Example 1. The thin-walled portions 13 in the resulting bipolar plate had an average thickness of 0.15 mm.

### Example 15

Aside from using 19.2 parts by weight of o-cresol novolak epoxy resin having an epoxy equivalent weight of 200 g/eq and an ICI viscosity at 150°C of 0.26 Pa·s, 10.1 parts by weight of phenol novolak resin having a hydroxyl equivalent weight of 105 g/eq and an ICI viscosity at 150°C of 0.10 Pa·s, and 0.30 part by weight of 2-heptadecylimidazole as a curing accelerator, a fuel cell bipolar plate composition and a fuel cell bipolar plate were obtained in the same way as in Example 1. The thin-walled portions 13 in the resulting bipolar plate had an average thickness of 0.12 mm.

Comparative Example 12

Aside from using 11.8 parts by weight of o-cresol novolak epoxy resin having an epoxy equivalent weight of 200 g/eq and an ICI viscosity at 150°C of 0.26 Pa·s, 6.3 parts by weight of phenol novolak resin having a hydroxyl equivalent weight of 105 g/eq and an ICI viscosity at 150°C of 0.10 Pa·s, and 0.18 part by weight of 2-heptadecylimidazole as a curing accelerator, a fuel cell bipolar plate composition was prepared and compression-molded in the same way as in Example 1. However, molding of the fuel cell bipolar plate was incomplete.

Comparative Example 13

Aside from using 20.4 parts by weight of o-cresol novolak epoxy resin having an epoxy equivalent weight of 200 g/eq and an ICI viscosity at 150°C of 0.26 Pa·s, 10.7 parts by weight of phenol novolak resin having a hydroxyl equivalent weight of 105 g/eq and an ICI viscosity at 150ºC of 0.10 Pa·s, and 0.31 part by weight of 2-heptadecylimidazole as a curing accelerator, a fuel cell bipolar plate composition and a fuel cell bipolar plate were obtained in the same way as in Example 1. The thin-walled portions 13 in the resulting bipolar plate had an average thickness of 0.11 mm.

Table 4 shows differences in the resistivity and thickness variation of the bipolar plate due to the amount of binder component resins included in Examples 12 to 15 and in Comparative Examples 12 and 13.
## Table 4

| | | Epoxy resin content (pbw) | Phenol resin content (pbw) | Imidazole compound content (pbw) | Binder component resins (pbw) | Resistivity (mΩ·cm) | Average thickness (μm) | Thickness variation (μm) | Thickness variation (%) |
|---|---|---|---|---|---|---|---|---|---|
| Example | 12 | 12.8 | 6.8 | 0.20 | 19.8 | 8 | 200 | 32 | ±8.0 |
| | 13 | 14.8 | 7.8 | 0.23 | 22.8 | 11 | 180 | 28 | ±7.8 |
| | 14 | 17.5 | 9.2 | 0.27 | 27.0 | 13 | 150 | 24 | ±8.0 |
| | 15 | 19.2 | 10.1 | 0.30 | 29.6 | 16 | 120 | 17 | ±7.1 |
| Comparative Example | 12 | 11.8 | 6.3 | 0.18 | 18.3 | 7 | -- | -- | -- |
| | 13 | 20.4 | 10.7 | 0.31 | 31.4 | 24 | 110 | 78 | ±35 |

As shown in Table 4, in Examples 12 to 15, it was possible to mold fuel cell bipolar plates in which the thin-walled portions had an average thickness of from 0.12 to 0.20 mm and a thickness variation of within 32 μm. In Comparative Example 12, due to insufficient flow by the fuel cell bipolar plate composition, the composition did not thoroughly fill the mold interior, as a result of which a fuel cell bipolar plate in which the thin-walled portions had an average thickness of 0.12 to 0.20 mm could not be molded. In Comparative Example 13, although it was possible to mold a fuel cell bipolar plate in which the thin-walled portions were 0.11 mm, because the amount of binder component resins was too large, the electrical conductivity was inadequate. Moreover, a large amount of flash arose, resulting in a thickness variation of 78 μm, and the thickness precision was insufficient.

Example 16

Aside from using 0.1 part by weight of carnauba wax, a fuel cell bipolar plate composition and a fuel cell bipolar plate were obtained in the same way as in Example 1. The thin-walled portions 13 in the resulting bipolar plate had an average thickness of 0.16 mm.

### Example 17

Aside from using 0.5 part by weight of zinc stearate, a fuel cell bipolar plate composition and a fuel cell bipolar plate were obtained in the same way as in Example 1. The thin-walled portions 13 in the resulting bipolar plate had an average thickness of 0.16 mm.

### Example 18

Aside from using 1.0 part by weight of polyethylene wax, a fuel cell bipolar plate composition and a fuel cell bipolar plate were obtained in the same way as in Example 1. The thin-walled portions 13 in the resulting bipolar plate had an average thickness of 0.16 mm.

### Comparative Example 14

Aside from using 1.2 part by weight of montan wax, a fuel cell bipolar plate composition and a fuel cell bipolar plate were obtained in the same way as in Example 1. The thin-walled portions 13 in the resulting bipolar plate had an average thickness of 0.16 mm.

### Comparative Example 15

Aside from using 0.09 part by weight of montan wax, a fuel cell bipolar plate composition was prepared and compression-molded in the same way as in Example 1. However, breakage arose during demolding, as a result of which a fuel cell bipolar plate could not be obtained.

### Comparative Example 16

Aside from not adding an internal mold release agent and using a spray-type external mold release agent, a fuel cell bipolar plate composition was prepared and compression-molded in the same way as in Example 1. However, breakage arose during demolding, as a result of which a fuel cell bipolar plate could not be obtained.

Table 5 shows differences in the flexural strength, flexural modulus, flexural strain, resistivity and thickness variation of the bipolar plate due to the internal molding release agent in Examples 16 to 18 and in Comparative Examples 14 to 16.

## Table 5

| | | Type of internal mold release agent | Amount of internal mold release agent added (pbw) | Flexural strength (MPa) | Flexural modulus (GPa) | Flexural strain (%) | Resistivity (mΩ·cm) | Average thickness (μm) | Thickness variation (μm) | Thickness variation (%) |
|---|---|---|---|---|---|---|---|---|---|---|
| Example | 16 | carnauba wax | 0.10 | 75 | 11 | 0.8 | 8 | 160 | 21 | ±6.6 |
| | 17 | zinc stearate | 0.50 | 69 | 12 | 0.7 | 8 | 160 | 21 | ±6.6 |
| | 18 | polyethylene wax | 1.00 | 68 | 12 | 0.7 | 9 | 160 | 19 | ±5.9 |
| Comparative Example | 14 | montan wax | 1.20 | 45 | 12 | 0.4 | 15 | 160 | 48 | ±15 |
| | 15 | montan wax | 0.09 | -- | -- | -- | -- | -- | -- | -- |
| | 16 | None (spray-type external mold release agent was used) | -- | -- | -- | -- | -- | -- | -- | -- |

As shown in Table 5, in Examples 16 to 18, it was possible to mold fuel cell bipolar plates in which the thin-walled portions had an average thickness of from 0.16 mm and a thickness variation of within 21 μm. In Comparative Example 14, it was possible to mold a fuel cell bipolar plate in which the thin-walled portions had an average thickness of 0.16 mm. However, but because the thickness variation was 48 μm and the amount of internal mold release agent was too large, the fuel cell bipolar plate did not cure within the designated molding time, resulting in an inadequate strength. In Comparative Examples 15 and 16, the mold releasability was inadequate, as a result of which the fuel cell bipolar plate stuck firmly to the inside of the mold. During demolding, the fuel cell bipolar plate ended up breaking.

The properties in the above tables were measured by the following methods.

[1] Flexural Strength, Flexural Modulus, Flexural Strain:

Measured based on ASTM D790 (Standard Test Methods for Flexural Properties of Unreinforced and Reinforced Plastics and Electrical Insulating Materials).

[2] Resistivity

Measured based on JIS H0602 (Method for Measuring Resistivity of Silicon Single Crystal and Silicon Wafer Using a Four-Point Probe).

[3] Glass Transition Point (Tg)

Measured using a thermomechanical analyzer.

[4] Thickness Variation

The thicknesses of all the thin-walled portions on a bipolar plate were measured at ten points each with a micrometer, and the average thickness was calculated. In addition, the thickness variation and the percent thickness variation were determined using the following formulas.

$$\texttt{Thickness variation = maximum thickness - minimum thickness}$$

$$\texttt{Percent thickness variation, } \pm(\texttt{\%}) =$$
$$\texttt{(thickness variation/average thickness)/2} \times \texttt{100}$$

**Claims**

1.  A fuel cell bipolar plate obtained by molding a composition comprising graphite and an epoxy resin composition comprising an o-cresol novolak resin as a base resin, and phenol novolak resin as a curing agent, **characterised in that** said composition comprises 100 parts by weight of a porous artificial graphite material having a true density of from 1.63 to 2.20 g/ml and an average particle size (d = 50) of from 20 to 100 μm as said graphite; from 19 to 30 parts by weight of said epoxy resin; and from 0.1 to 1.0 part by weight of an internal mold release agent; and wherein the o-cresol novolak epoxy resin constituting said base resin has an epoxy equivalent weight of from 195 to 216 g/eq and an ICI viscosity at 150°C of from 0.20 to 1.00 Pa·s; and the phenol novolak resin constituting said curing agent has a hydroxyl equivalent weight of from 103 to 106 g/eq and an ICI viscosity at 150°C of from 0.03 to 0.50 Pa·s; and wherein
the bipolar plate has a thin-walled portion with an average thickness of from 0.12 to 0.20 mm.

2.  The fuel cell bipolar plate of claim 1, wherein the average thickness of the thin-walled portion has a thickness variation of within ±10%.

3.  The fuel cell bipolar plate of claim 1 or 2, wherein the phenol novolak resin is included in an amount of from 0.98 to 1.02 equivalent per equivalent of the o-cresol novolak epoxy resin.

4. The fuel cell bipolar of any one of claims 1 to 3, wherein the epoxy resin further includes an imidazole compound as a curing accelerator.

5. The fuel cell bipolar plate of claim 4, wherein the imidazole compound is included in an amount of from 0.65 to 1.02 part by weight per 100 parts by weight of a mixture of the o-cresol novolak epoxy resin and the phenol novolak resin.

6. The fuel cell bipolar plate of any one of claims 1 to 5, wherein the artificial graphite material includes at most 1 wt% of particles with a particle size of up to 1 $\mu$m and at most 1 wt% of particles with a particle size of at least 300 $\mu$m.

7. The fuel cell bipolar plate of any one of claims 1 to 6, wherein the internal mold release agent is at least one selected from among metal soaps, long-chain fatty acids, and hydrocarbon-based synthetic waxes.

**Patentansprüche**

1. Bipolare Brennstoffzellplatte, die durch das Formen einer Zusammensetzung erhalten wird, die Graphit und eine Epoxyharzzusammensetzung umfasst, die ein o-Cresol-Novolakharz als Basisharz und Phenol-Novolakharz als Härtungsmittel umfasst, **dadurch gekennzeichnet, dass** die Zusammensetzung Folgendes umfasst: 100 Gewichtsteile eines porösen Synthetikgraphitmaterials mit einer wahren Dichte von 1,63 bis 2,20 g/ml und einer mittleren Teilchengröße (d = 50) von 20 bis 100 $\mu$m als Graphit; 19 bis 30 Gewichtsteile des Epoxyharzes und 0,1 bis 1,0 Gewichtsteile eines inneren Formtrennmittels, und worin das o-Cresol-Novolakepoxyharz, das das Basisharz bildet, ein Epoxyäquivalentgewicht von 195 bis 216 g/Äqu. und eine ICI-Viskosität bei 150 °C von 0,20 bis 1,00 Pa·s aufweist und das Phenol-Novolakharz, das das Härtungsmittel bildet, ein Hydroxyläquivalentgewicht von 103 bis 106 g/Äqu. und eine ICI-Viskosität bei 150 °C von 0,03 bis 0,50 Pa·s aufweist, und worin die bipolare Platte einen dünnwandigen Abschnitt mit einer mittleren Dicke von 0,12 bis 0,20 mm aufweist.

2. Bipolare Brennstoffzellplatte nach Anspruch 1, worin die mittlere Dicke des dünnwandigen Abschnitts eine Dickevariation innerhalb von $\pm$ 10 % aufweist.

3. Bipolare Brennstoffzellplatte nach Anspruch 1 oder 2, worin das Phenol-Novolakharz in einer Menge von 0,98 bis 1,02 Äquivalenten pro Äquivalent des o-Cresol-Novolakepoxyharzes enthalten ist.

4. Bipolare Brennstoffzellplatte nach einem der Ansprüche 1 bis 3, worin das Epoxyharz ferner eine Imidazolverbindung als Härtungsbeschleuniger umfasst.

5. Bipolare Brennstoffzellplatte nach Anspruch 4, worin die Imidazolverbindung in einer Menge von 0,65 bis 1,02 Gewichtsteilen pro 100 Gewichtsteile eines Gemischs von dem o-Cresol-Novolakepoxyharz und dem Phenol-Novolakharz enthalten ist.

6. Bipolare Brennstoffzellplatte nach einem der Ansprüche 1 bis 5, worin das Synthetikgraphitmaterial maximal 1 Gew.-% Teilchen mit einer Teilchengröße von bis zu 1 $\mu$m und maximal 1 Gew.-% Teilchen mit einer Teilchengröße von zumindest 300 $\mu$m umfasst.

7. Bipolare Brennstoffzellplatte nach einem der Ansprüche 1 bis 6, worin das innere Formtrennmittel zumindest ein aus Metallseifen, langkettigen Fettsäuren und synthetischen Wachsen auf Kohlenwasserstoffbasis ausgewähltes Mittel ist.

**Revendications**

1. Plaque bipolaire de pile à combustible obtenue par le moulage d'une composition comprenant du graphite et une composition de résine époxy comprenant une résine o-crésol novolaque comme résine de base, et de la résine phénolique novolaque comme agent de durcissement, **caractérisée en ce que** ladite composition comprend 100 parties en poids d'un matériau de graphite artificiel poreux ayant une densité vraie de 1,63 à 2,20 g/ml et une dimension de particule moyenne (d = 50) de 20 à 100 $\mu$m comme graphite précité; de 19 à 30 parties en poids de ladite résine époxy; et de 0,1 à 1,0 partie en poids d'un agent de libération de moule interne; et où la résine époxy o-crésol novolaque constituant ladite résine de base a un poids d'époxy équivalent de 195 à 216 g/eq et une viscosité ICI à 150°C de 0,20 à 1,00 Pa.s; et la résine phénolique novolaque constituant ledit agent de durcissement a un poids hydroxyle équivalent de 103 à 106 g/eq et une viscosité ICI à 150°C de 0,03 à 0,50 Pa.s; et où la plaque bipolaire a une portion à paroi mince d'une épaisseur moyenne de 0,12 à 0,20 mm.

**2.** Plaque bipolaire de pile à combustible selon la revendication 1, dans laquelle l'épaisseur moyenne de la portion de paroi mince a une variation d'épaisseur selon $\pm$ 10%.

**3.** Plaque bipolaire de pile à combustible selon la revendication 1 ou 2, dans laquelle la résine phénolique novolaque est incluse en une quantité de 0,98 à 1,02 équivalent par équivalent de la résine époxy o-crésol novolaque.

**4.** Plaque bipolaire de pile à combustible selon l'une quelconque des revendications 1 à 3, dans laquelle la résine époxy comprend en outre un composé d'imidazole comme accélérateur de durcissement.

**5.** Plaque bipolaire de pile à combustible selon la revendication 4, où le composé d'imidazole est inclus en une quantité de 0,65 à 1,02 parties en poids pour 100 parties en poids d'un mélange de la résine époxy o-crésol novolaque et de la résine phénolique novolaque.

**6.** Plaque bipolaire de pile à combustible selon l'une quelconque des revendications 1 à 5, dans laquelle le matériau de graphite artificiel comprend au maximum 1% en poids de particules avec une dimension de particule jusqu'à $1\mu$m et au maximum 1% en poids de particules avec une dimension de particule d'au moins 300 $\mu$m.

**7.** Plaque bipolaire de pile à combustible selon l'une quelconque des revendications 1 à 6, dans laquelle l'agent de libération de moule interne est au moins un sélectionné parmi des savons métalliques, des acides gras à longue chaîne et des cires synthétiques à base d'hydrocarbone.

# FIG.1A

1    11 11A    11A    11B    11B

12    13    13

# FIG.1B

2    21 21A    21A    21B    21B

23    23

22 22A    22A    22B    22B

# FIG.1C

3    31    31A    33    31B

32A    32    32B    33

**REFERENCES CITED IN THE DESCRIPTION**

**Patent documents cited in the description**

- JP 2000182630 A
- JP 2001189160 A
- JP 2007134225 A